# EUROPÄISCHE PATENTSCHRIFT

(11) **EP 3 740 524 B1**
(45) Veröffentlichungstag und Bekanntmachung des Hinweises auf die Patenterteilung: **26.05.2021**
(21) Anmeldenummer: 18756241.8
(22) Anmeldetag: 17.08.2018
(51) Int. Cl.: C08G 77/442, C08G 63/695, C08G 65/336, C08G 77/445, C08G 77/46

(54) **VERFAHREN ZUR HERSTELLUNG VON SILANTERMINIERTEN POLYMEREN**
METHOD FOR PRODUCING SILANE-TERMINATED POLYMERS
PROCÉDÉ DE FABRICATION DE POLYMÈRES À TERMINAISON SILANE

(43) Veröffentlichungstag der Anmeldung: 25.11.2020
(73) Patentinhaber: Wacker Chemie AG, 81737 München (DE)
(72) Erfinder: STANJEK, Volker, 84539 Ampfing (DE); ZANDER, Lars, 84503 Altötting (DE)
(74) Vertreter: Budczinski, Angelika
(86) Internationale Anmeldenummer: PCT/EP2018/072367
(87) Internationale Veröffentlichungsnummer: WO 2020/035154

(56) Entgegenhaltungen:
- EP-A1- 1 535 940
- DE-A1-102008 021 221
- DE-A1-102011 087 603

## Beschreibung

Die Erfindung betrifft ein Verfahren zur Herstellung von vernetzbaren silanterminierten Polymeren, die eine gegenüber Luftfeuchtigkeit erhöhte Stabilität aufweisen.

Feuchtigkeitsvernetzbare Zubereitungen sind allgemein bekannt. Sie werden verbreitet als Kleb- und Dichtstoffe wie auch für Beschichtungen eingesetzt. Ein wichtiges feuchtigkeitsreaktives Bindemittel für derartige Produkte stellen silylfunktionalisierte Polymere dar. Unter diesen wiederum sind diejenigen mit terminalen Alkoxysilylgruppen bevorzugt, da die Spaltprodukte nicht korrosiv und in den geringen freigesetzten Konzentrationen toxikologisch unbedenklich sind.

Entsprechende alkoxysilanterminierte Prepolymere sind seit langem Stand der Technik und beispielsweise unter den Handelsnamen GENIOSIL® STP-E (Fa. Wacker Chemie AG), MS-Polymer (Fa. Kaneka), DESMOSEAL (Fa. Bayer AG) oder SPUR (Fa. Momentive) kommerziell erhältlich.

Die silylfunktionalisierten Polymere werden nach bekannten Methoden hergestellt. Gängig ist u.a. die Umsetzung von Polyolen, insbesondere von hydroxylterminierten Polyethern, Polyurethanen oder Polyestern wie auch von hydroxylfunktionellen Polyacrylaten mit Isocyanatoalkyl-alkoxysilanen. Eine weitere Methode sieht eine Reaktion der o.g. Polyole mit Di- oder Polyisocyanaten vor, wobei letztere im Überschuss eingesetzt werden, so dass in diesem ersten Reaktionsschritt isocyanatfunktionelle Polymere erzeugt werden, die dann in einem zweiten Reaktionsschritt mit Alkoxysilanen umgesetzt werden, die über eine alkylgebundene isocyanatreaktive Gruppe verfügen, insbesondere mit N-substituierten Aminoalkyl-alkoxysilanen.

Die Reaktion von hydroxylfunktionellen Polymeren mit Isocyanaten wie den o.g. Isocyanatoalkyl-alkoxysilanen, Di- oder Polyisocyanaten wird vorzugswiese in Gegenwart von Katalysatoren durchgeführt, da in dem entsprechenden Reaktionsschritt nur so hinreichend hohe Reaktionsgeschwindigkeiten für eine wirtschaftliche Herstellung der alkoxysilanterminierten Polymere erreicht werden können. Bekannt sind als Silan-Kondensationskatalysatoren zahlreiche Verbindungen, wie z.B. Dialkylzinn (IV) verbindungen, wie Dibutylzinndilaurat oder Dioctylzinndilaurat, diverse Metallkomplexverbindungen (Chelate und Carboxylate), z.B. des Titans, Zirkoniums, Amine und deren Salze und andere bekannte saure und basische Katalysatoren.

Nachteilig an der Verwendung der o.g. Katalysatortypen ist jedoch die Tatsache, dass diese nach der Reaktion im Endprodukt, dem silanfunktionellen Polymer, verbleiben und somit auch dessen Reaktion mit Feuchtigkeit und die damit verbundene Feuchtigkeitshärtung katalysieren können. Dies verschlechtert die Lagerstabilität der entsprechenden Produkte und erschwert deren Handhabung.

Vorteilhaft ist hier die Verwendung von Bismutkatalysatoren, wie sie z.B. in EP-A 1535940, EP-A 2271687 oder EP-A 2785755 beschrieben ist, da diese zwar eine hohe katalytische Aktivität zur Beschleunigung der Reaktion von hydroxylfunktionellen Polymeren mit Isocyanaten aufweisen, gleichzeitig die Hydrolyse und Kondensation von Silangruppen aber nur vergleichsweise schwach katalysieren. Diese ausgesprochen erwünschte Kombination gegensätzlicher katalytischer Wirkungen auf Urethanbildung und Silankondensation wird insbesondere in EP-A 1535940 sehr eindrücklich nachgewiesen.

Gleichzeitig kann der Fachmann aus den Beispielen von EP-A 2271687 oder EP-A 2785755 lernen, dass es vorteilhaft ist, wenn das Polyol, das mit einer isocyanatfunktionellen Verbindung zur Reaktion gebracht werden soll, vor dem Einsatz eines Bismutkatalysators getrocknet wird. Dies vermeidet zum einen Nebenreaktionen der Isocyanatfunktionen mit dem andernfalls vorhandenen Wasser unter Harnstoffbildung, vor allem aber wird die erwünschte hohe katalytische Aktivität von Bismutkatalysatoren auf die Urethanbildung durch Wasser nachhaltig beeinträchtigt.

Die Trocknung erfolgt dabei bei Temperaturen von 80-100°C im Vakuum. Unter diesen Bedingungen wird ein getrocknetes Polyol mit einem Wassergehalt deutlich unter 50 ppm erhalten. Unter diesen Bedingungen ist die folgende Reaktion mit einer isocyanatfunktionellen Verbindung (im Falle von EP-A 2785755 mit einem Diisocyanat, im Falle von EP-A 2271687 einem Isocyanatoalkyl-alkoxysilan) innerhalb einer Stunde abgeschlossen. Nachteilig an diesem Verfahren ist jedoch der zusätzliche Aufwand, der sich aus der sehr gründlichen Trocknung des einzusetzenden Polyols ergibt.

Die Dokumente DE 10 2008 021221 und DE 10 2011 087603 offenbaren in ihren Beispiel 1 ein Verfahren, wobei die Reaktionsmischung getrocknet wird. Der Wassergehalt ist jedoch nicht bekannt.

Gegenstand der Erfindung ist ein Verfahren zur Herstellung von silanterminierten Polymeren der Formel (I)

Y-[Z-C(=O)-NR³-(CR¹₂)_{b}-SiRₐ(OR²)₃₋ₐ]ₓ (I),

wobei
- Y: einen x-wertigen Polymerrest bedeutet, der mindestens eine Polyether-, Polyester- und/oder Polyacrylateinheit enthält,
- R: gleich oder verschieden sein kann und einen einwertigen, gegebenenfalls substituierten, SiC-gebundenen Kohlenwasserstoffrest darstellt,
- R¹: gleich oder verschieden sein kann und Wasserstoffatom oder einen einwertigen, gegebenenfalls substituierten Kohlenwasserstoffrest darstellt,
- R²: gleich oder verschieden sein kann und Wasserstoffatom oder einen einwertigen, gegebenenfalls substituierten Kohlenwasserstoffrest darstellt,
- R³: gleich oder verschieden sein kann und Wasserstoffatom, einen einwertigen, gegebenenfalls substituierten Kohlenwasserstoffrest, eine Gruppe -(CR¹₂)_{b}-SiRₐ(OR²)₃₋ₐ oder eine Gruppe -CH(COOR')-CH₂-COOR' bedeutet,
- R': gleich oder verschieden sein kann und einen einwertigen, gegebenenfalls substituierten Kohlenwasserstoffrest darstellt,
- Z: gleich oder verschieden sein kann und NH oder ein Sauerstoffatom bedeutet,
- x: eine ganze Zahl von 1 bis 50, bevorzugt 1, 2 oder 3, besonders bevorzugt 2, ist,
- a: gleich oder verschieden sein kann und 0, 1 oder 2, bevorzugt 0 oder 1, ist und
- b: gleich oder verschieden sein kann und eine ganze Zahl von 1 bis 10, bevorzugt 1, 3 oder 4, besonders bevorzugt 1 oder 3, insbesondere 1, ist,
durch Umsetzung von mindestens einem hydroxylfunktionellen Polymer (a), das mindestens eine Polyether-, Polyester- und/oder Polyacrylateinheit enthält, mit mindestens einer Verbindung, die über mindestens eine Isocyanatgruppe verfügt, in Gegenwart von mindestens einem bismuthaltigen Katalysator (K), mit der Maßgabe, dass die Reaktionsmischung zu Reaktionsbeginn 50 bis 250 ppm Wasser enthält.

Die Angabe ppm beschreibt dabei 1 Gewichtsteil Wasser pro 1 000 000 Gewichtsteilen Reaktionsmischung.

Der Erfindung liegt die überraschende Entdeckung zugrunde, dass zwar Wassergehalte über 250 ppm die Reaktion deutlich verlangsamen, dies überraschenderweise aber bei kleineren Wassergehalten nicht der Fall ist. Diese Entdeckung ist umso bemerkenswerter, als dass die Auswirkung des Wassergehaltes auf die Reaktivität des Katalysators (K) weitgehend unabhängig von dessen Konzentration ist. Daher kann bei nicht erfindungsgemäß hohen Wassergehalten auch mit höheren Katalysatorkonzentrationen keine hinreichend hohe Reaktionsgeschwindigkeit mehr erreicht werden, wohingegen bei erfindungsgemäß kleinen Wassergehalten auch sehr niedrige Katalysatorkonzentrationen ausreichend sind.

Vor allem aber ist überraschend, dass ein Wassergehalt unterhalb 250 ppm aber oberhalb von 50 ppm bereits hinreichend niedrig ist und keinen signifikanten Reaktivitätsverlust im Vergleich zu nahezu vollständig wasserfreien Reaktionsmischungen mehr aufweist. Diese überraschende Entdeckung erlaubt eine wesentlich einfachere Trocknung der eingesetzten, meist hygroskopischen und damit oftmals wasserhaltigen hydroxylfunktionellen Polymere (a), als dies im Stand der Technik beschrieben ist. Im günstigsten Fall, in dem die eingesetzten Rohstoffe, insbesondere die eingesetzte hydroxylfunktionellen Polymere (a), von vorneherein hinreichend niedrige Wassergehälter aufweisen, kann diese Entdeckung einen Trocknungsschritt sogar vollkommen überflüssig machen.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom oder Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- oder Ethylrest.

Beispiele für Reste R³ sind das Wasserstoffatom, eine Gruppe -CH(COOR')-CH₂-COOR' oder die für R angegebenen Reste, insbesondere Cyclohexyl-, Cyclopentyl-, n- und iso-Propyl-, n-, iso- und t-Butyl-, die diversen Sterioisomere des Pentylrests, Hexylrests oder Heptylrests sowie der Phenylrest.

Bei Rest R³ handelt es sich vorzugsweise um Wasserstoffatom, eine Gruppe -CH(COOR')-CH₂-COOR', eine Gruppe -(CR¹₂)_{b}-SiRₐ(OR²)₃₋ₐ mit R, R', R¹, R², a und b gleich einer der in Formel (I) angegebenen Bedeutungen oder einen gegebenenfalls substituierten Kohlenwasserstoffrest mit 1 bis 20 Kohlenstoffatomen, bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen, besonders bevorzugt um eine lineare, verzweigte oder cyclische Alkylgruppe mit 1 bis 8 Kohlenstoffatomen.

Bei den Resten R' handelt es sich vorzugsweise um Alkylgruppen mit 1 bis 10 Kohlenstoffatomen, besonders bevorzugt um Methyl-, Ethyl- oder Propylreste.

Falls die Variable Z für ein Sauerstoffatom steht, steht R³ vorzugsweise für ein Wasserstoffatom.

Falls die Variable Z für eine NH-Gruppe steht, stellt R³ vorzugsweise eine der o.g. Bedeutungen ungleich Wasserstoffatom dar.

Die Reste Y weisen vorzugsweise zahlenmittlere Molmassen Mₙ von mindestens 200 g/mol, besonders bevorzugt von mindestens 500 g/mol, insbesondere von mindestens 1 000 g/mol auf. Die Reste Y weisen vorzugsweise zahlenmittlere Molmassen Mₙ von höchstens 40 000 g/mol, insbesondere von höchstens 25 000 g/mol, insbesondere von höchstens 20 000 g/mol, auf.

Die zahlenmittlere Molmasse Mₙ wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Beispiele für Polymerrest Y sind organische Polymerreste, deren zahlenmittlere Molekülmasse 200 bis 40 000 g/mol beträgt und die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyamide; Polyacrylate; Polymetacrylate; Vinylpolymer oder Polycarbonate enthalten.

Bevorzugt handelt es sich bei dem Polymerrest Y um Polyester-, Polyether-, Polyurethan-, Polyalkylen- oder Polyacrylatreste, besonders bevorzugt um Polyurethanreste, Polyesterreste oder Polyoxyalkylenreste, insbesondere um Polyoxypropylenreste, mit der Maßgabe, dass deren zahlenmittlere Molekülmasse 200 bis 40 000 g/Mol, insbesondere bevorzugt 6000 bis 22 000 g/Mol, beträgt.

Beispiele für die erfindungsgemäß eingesetzten bismuthaltigen Katalysatoren (K) sind Bismuthcarboxylate wie Bismuth-(2-ethylhexanoat), Bismuth-neodecanoat oder Bismuth-tetramethylheptandionat. Auch Katalysatoren, die neben Bismut auch noch weitere Metalle enthalten, insbesondere Bismut-Zink-Mischkatalysatoren sind für das erfindungsgemäße Verfahren geeignet. Beispiele für kommerziell erhältliche Katalysatoren sind Borchi® Kat 22, Borchi® Kat VP 0243, Borchi® Kat VP 0244 oder OMG 315 (alle OMG-Borchers), Bi-Neodecanoat der Firmen Chemos oder American Elements, Reaxis MSA 70 oder Reaxis C 719 der Fa. Reaxis, BICAT®-Katalysatoren (The Shepherd Chemical Company, USA) und K-Kat® K-348 (KING INDUSTRIES, INC., USA).

Bevorzugt handelt es sich bei dem erfindungsgemäß eingesetzten Katalysator (K) um Carboxylate des Bismuts, wobei Bismuth-(2-ethylhexanoat), Bismuth-neodecanoat oder deren Mischungen besonders bevorzugt sind.

Im erfindungsgemäßen Verfahrensschritt werden Katalysatoren (K) in Mengen von bevorzugt 1 bis 1000 ppm, besonders bevorzugt 20 bis 600 ppm, insbesondere 60 bis 400 ppm, eingesetzt. Die Angabe ppm beschreibt dabei 1 Gewichtsteil Katalysator (K) pro 1 000 000 Gewichtsteilen Reaktionsmischung.

Das erfindungsgemäß vorhandene Wasser kann dabei auf verschiedene Weise in die erfindungsgemäße Reaktionsmischung gelangen. So kann es z.B. ein Nebenprodukt bei der Herstellung des eingesetzten Polymers Y-(ZH)ₓ darstellen, das danach nicht oder zumindest nicht vollständig aus dem Polymer entfernt wurde, wobei Y, Z und x eine in Formel (I) angegebene Bedeutung haben. Wird als Polymer Y-(ZH)ₓ ein Polyether, insbesondere bei Polypropylenglycol eingesetzt, kann es vor oder nach der Polymerherstellung auch in Spuren zu einer Eliminierung der terminalen OH-Gruppe unter Wasserabspaltung kommen. Zudem kann Wasser auch durch Kontakt des Polymers Y-(ZH)ₓ mit der Luftfeuchtigkeit, z.B. während der Lagerung, Ab- oder Umfüllungen in das Polymer gelangen. Schließlich kann das Wasser auch noch durch Luftkontakt der Reaktionspartner vor oder während der Zusammenmischung der erfindungsgemäßen Reaktionsmischung in diese gelangen.

Auch eine bewusste Wasserzugabe, z.B. in Form von destilliertem Wasser oder herkömmlichem Leitungswasser, ist vorstellbar, insbesondere, wenn durch das erfindungsgemäße Verfahren neben den Polymeren der Formel (I) gleichzeitig auch ein Reaktionsprodukt des zugegebenen Wassers mit einer weiteren Komponente der Reaktionsmischung, z.B. einem der unten genannten Isocyanatosilane (c1) oder (c2), generiert werden soll.

Das erfindungsgemäße Verfahren wird vorzugsweise bei Temperaturen zwischen 20°C und 180°C, besonders bevorzugt zwischen 40°C und 150°C, insbesondere zwischen 50°C und 120°C durchgeführt. Wird das erfindungsgemäße Verfahren in mehreren Reaktionsschritten durchgeführt, so wird jeder Einzelschritt vorzugsweise in den oben genannten bevorzugten Temperaturbereichen durchgeführt.

Das erfindungsgemäße Verfahren wird vorzugsweise bei einem Druck von 100 bis 2000 hPa, besonders bevorzugt bei 900 bis 1100 hPa, durchgeführt.

Das erfindungsgemäße Verfahren wird vorzugsweise in SchutzgasAtmosphäre, bevorzugt Argon oder Stickstoff, durchgeführt.

Das erfindungsgemäße Verfahren kann dabei kontinuierlich durchgeführt werden, z.B. in einem oder mehreren Röhrenreaktoren oder Loop-Reaktoren, in hintereinander geschalteten Kaskaden mehrerer Rührreaktoren oder auch nur in einem Rührreaktor, dem kontinuierlich neue Edukte zugeführt werden, während gleichzeitig kontinuierlich Reaktionsmischung entnommen wird. Auch Kombinationen mehrerer Reaktortypen sind vorstellbar.

Ebenso kann das erfindungsgemäße Verfahren auch diskontinuierlich durchgeführt werden, z.B. in einem Rührreaktor, in dem alle Edukte wahlweise gleichzeitig bzw. zeitnah hintereinander oder auch in mehreren zeitlich klar voneinander getrennten Verfahrensschritten zugegeben werden.

Ein bevorzugter Gegenstand der Erfindung ist ein Verfahren zur Herstellung von silanterminierten Polymeren (Verfahrensvariante 1) der Formel (Ia)

Y¹-[NH-C(=O)-NR³-(CR¹₂)_{b}-SiRₐ(OR²)₃₋ₐ]ₓ (Ia),

durch Umsetzung von
(a1) mindestens einem hydroxylfunktionellen Polymer, das mindestens eine Polyether-, Polyester- und/oder Polyacrylateinheit enthält,
(b1) mindestens einem Di- und/oder Polyisocyanat und
(c1) mindestens einem Aminosilan der Formel

   HNR³-(CR¹₂)_{b}-SiRₐ(OR²)₃₋ₐ (II)

   sowie gegebenenfalls weiteren von (a1), (b1) und (c1) unterschiedlichen Komponenten,
   wobei
   - Y¹: einen x-wertigen Polyurethanrest bedeutet, der mindestens eine Polyether-, Polyester- und/oder Polyacrylateinheit enthält,
   und alle übrigen Variablen die bei Formel (I) angegebene Bedeutung aufweisen,
   mit den Maßgaben, dass in mindestens einem Verfahrensschritt das hydroxylfunktionelle Polymer (a1) mit dem Di- oder Polyisocyanate (b1) oder einem isocyanatfunktinellen Folgeprodukt, welches aus einer Reaktion des Di- oder Polyisocyanate (b1) und des Aminosilan (c1) entstanden ist, umgesetzt wird, dass dieser Verfahrensschritt in Gegenwart von mindestens einem bismuthaltigen Katalysator (K) durchgeführt wird, und dass die Reaktionsmischung zu Beginn dieses Verfahrensschrittes 50 bis 250 ppm Wasser enthält.

Bevorzugt werden bei der Herstellung der silanterminierten Polymere der Formel (Ia) außer den Komponenten (a1), (b1) und (c1) sowie Katalysator (K) und Wasser keine weiteren Komponenten mehr eingesetzt.

Bei der erfindungsgemäßen Verfahrensvariante 1 werden die Mengenverhältnisse der Komponenten (a1), (b1) und (c1) vorzugsweise so gewählt, dass pro Mol Isocyanatgruppen aus Komponente (b1), 0,5 bis 1,5 Mol, besonders bevorzugt 0,8 bis 1,3 Mol, insbesondere 0,95 bis 1,2 Mol, isocyanatreaktive Gruppen aus den Komponenten (a1) und (c1) eingesetzt werden.

Bei den erfindungsgemäß eingesetzten Polyolen (a1) handelt es sich vorzugsweise um verzweigte oder unverzweigte Polyether- oder Polyesterpolyole, bevorzugt um Polyetherpolyole, besonders bevorzugt um Polypropylenglycole, insbesondere um unverzweigte Polypropylenglycole oder Polypropylenglycole mit einer Verzweigungsstelle.

Die erfindungsgemäß eingesetzten Polyole (a1) haben eine mittlere Molmasse Mₙ von bevorzugt 200 bis 30 000 g/mol, besonders bevorzugt von 600 bis 24 000 g/mol, insbesondere von 900 bis 20 000 g/mol. Diese sind vorzugsweise unverzweigt.

Bevorzugt haben die erfindungsgemäß eingesetzten Polyole (a1) bei 23°C eine Viskosität von 10 bis 1 000 000 mPas, besonders bevorzugt von 1000 bis 300 000 mPas.

Die Viskosität wird im Rahmen der vorliegenden Erfindung nach einer Temperierung auf 23°C mit einem DV 3 P-Rotationsviskosimeter von Fa. A. Paar (Brookfieldsystme), unter Verwendung von Spindel 5 bei 2,5 UPM entsprechend der ISO 2555 bestimmt.

Die erfindungsgemäß eingesetzten Polyole (a1) sind handelsübliche Produkte bzw. können nach in der Polymerchemie gängigen Verfahren hergestellt werden.

Als Komponente (a1) können auch Mischungen verschiedener Polyole, insbesondere auch Mischungen aus unverzweigten und einfach verzweigten Polyolen eingesetzt werden. Vorzugsweise werden jedoch ausschließlich unverzweigte Polyole eingesetzt.

Vorzugsweise enthalten die Polyole (a1) dabei so viel Wasser, dass dieses für mindestens 90% der in der erfindungsgemäßen Reaktionsmischung enthaltenen Gesamtwassermenge verantwortlich ist.

Beispiele für erfindungsgemäß eingesetzte Komponente (b1) sind alle gebräuchlichen Di- oder Polyisocyanate, wie z.B. Diisocyanatodiphenylmethan (MDI), sowohl in Form von rohem oder technischem MDI als auch in Form reiner 4,4' bzw. 2,4' Isomeren oder deren Mischungen, Tolylendiisocyanat (TDI) in Form seiner verschiedenen Regioisomere, insbesondere dem 2,4- sowie dem 2,6-TDI sowie Mischungen dieser Regioisomere, Diisocyanatonaphthalin (NDI), Isophorondiisocyanat (IPDI) oder auch von Hexamethylendiisocyanat (HDI). Beispiele für Polyisocyanate sind polymeres MDI (p-MDI), Triphenylmethantriisocanat oder aber Trimerisate (Biurethe oder Isocyanurate) der oben genannten Diisocyanate. Es können auch Mischungen verschiedener Di- und/oder Polyisocyanate eingesetzt werden.

Erfindungsgemäß eingesetzte Isocyanate (b1) sind handelsübliche Produkte bzw. nach in der Chemie gängigen Verfahren herstellbar.

Bevorzugt handelt es sich bei erfindungsgemäß eingesetzter Komponente (c1) um HN[(CH₂)₃-Si(OCH₃)₃]₂, HN[(CH₂)₃-Si(OC₂H₅)₃]₂, HN[(CH₂)₃-Si(OCH₃)₂CH₃]₂, HN[(CH₂)₃-Si(OC₂H₅)₂CH₃]₂, HN[(CH₂)-Si (OCH₃)₃]₂, HN[(CH₂)-Si (OC₂H₅)₃]₂, HN[(CH₂)-Si (OCH₃)₂CH₃]₂, HN[(CH₂)-Si (OC₂H₅)₂CH₃]₂, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)-Si (OCH₃)₃, cyclo-C₆H₁₁NH(CH₂)-Si (OC₂H₅)₃, cyclo-C₆H₁₁NH(CH₂)-Si (OCH₃)₂CH₃, cyclo-C₆H₁₁NH(CH₂)-Si (OC₂H₅)₂CH₃, Phenyl-NH (CH₂)₃-Si(OCH₃)₃, Phenyl-NH (CH₂)₃-Si(OC₂H₅)₃, Phenyl-NH (CH₂)₃-Si(OCH₃)₂CH₃, Phenyl-NH (CH₂)₃-Si(OC₂H₅)₂CH₃, Phenyl-NH(CH₂)-Si(OCH₃)₃, Phenyl-NH (CH₂)-Si (OC₂H₅)₃, Phenyl-NH (CH₂)-Si (OCH₃)₂CH₃, Phenyl-NH (CH₂)-Si (OC₂H₅)₂CH₃, Alkyl-NH(CH₂)₃-Si(OCH₃)₃, Alkyl-NH (CH₂)₃-Si(OC₂H₅)₃, Alkyl-NH (CH₂)₃-Si(OCH₃)₂CH₃, Alkyl-NH (CH₂)₃-Si(OC₂H₅)₂CH₃, Alkyl-NH (CH₂)-Si (OCH₃)₃, Alkyl-NH (CH₂)-Si (OC₂H₅)₃, Alkyl-NH (CH₂)-Si (OCH₃)₂CH₃ oder Alkyl-NH (CH₂)-Si (OC₂H₅)₂CH₃, besonders bevorzugt um cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)-Si (OCH₃)₃, cyclo-C₆H₁₁NH(CH₂)-Si (OC₂H₅)₃, cyclo-C₆H₁₁NH(CH₂)-Si (OCH₃)₂CH₃, cyclo-C₆H₁₁NH(CH₂)-Si (OC₂H₅)₂CH₃, Phenyl-NH (CH₂)₃-Si(OCH₃)₃, Phenyl-NH (CH₂)₃-Si(OC₂H₅)₃, Phenyl-NH (CH₂)₃-Si(OCH₃)₂CH₃, Phenyl-NH (CH₂)₃-Si(OC₂H₅)₂CH₃, Phenyl-NH(CH₂)-Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, Alkyl-NH(CH₂)₃-Si(OCH₃)₃, Alkyl-NH (CH₂)₃-Si(OC₂H₅)₃, Alkyl-NH (CH₂)₃-Si(OCH₃)₂CH₃, Alkyl-NH (CH₂)₃-Si(OC₂H₅)₂CH₃, Alkyl-NH(CH₂)-Si(OCH₃)₃, Alkyl-NH(CH₂)-Si(OC₂H₅)₃, Alkyl-NH(CH₂)-Si(OCH₃)₂CH₃ oder Alkyl-NH(CH₂)-Si(OC₂H₅)₂CH₃, wobei "Alkyl" vorzugsweise für Ethyl-, n-Propyl-, i-Propyl-, n-Butyl-, i-Butyl-, t-Butyl- sowie die verschiedenen Sterioisomere des Pentyl-, Hexyl-, Heptyl- oder Octylrestes steht.

Gemäß der erfindungsgemäßen Verfahrensvariante 1 können die silanterminierten Polyurethane der Formel (Ia) durch eine gleichzeitige Reaktion aller Komponenten (a1), (b1) und (c1) hergestellt werden. Oftmals wird jedoch ein mehrstufiger Prozess bevorzugt, bei dem zunächst das hydroxyfunktionelle Polymer (a1) mit einem Überschuss eines Di- oder Polyisocyanates (b1) zur Reaktion gebracht wird, bevor eine Reaktion mit den Silanen (c1) erfolgt. Auf diese Weise können Nebenreaktionen minimiert werden, bei denen das hydroxylfunktionelle Polymer (a1) mit den Silylgruppen des Silans (c1) reagiert und unter Ausbildung einer Polymer-O-Si-Bindung eine bis dahin Si-gebundene Alkoxygruppe substituiert.

Auch das letztbeschriebene, mehrstufige Verfahren kann kontinuierlich oder diskontinuierlich durchgeführt werden. Ersteres geschieht dann in mehreren hintereinander geschalteten Reaktoren, in denen die unterschiedlichen Reaktionsschritte durchgeführt werden, wohingegen im diskontinuierlichen Prozess die schrittweise Reaktionsführung durch eine entsprechend gesteuerte sukzessive Zugabe der Edukte erreicht wird. Der Bismutkatalysator (K) wird in beiden Fällen vor allem für den ersten Reaktionsschritt, die Umsetzung der Komponenten (a1) und (b1) benötigt. Zu Beginn dieses Reaktionsschrittes liegt der erfindungsgemäße Wassergehalt bei 50 bis 250 ppm. Der zweite Reaktionsschritt, die Umsetzung der nach Schritt 1 verbliebenen Isocyanatgruppen mit Aminosilanen (c1) erfordert ob der extrem hohen Reaktivität von Isocyanatgruppen gegenüber Aminen in der Regel keinen Katalysator. Daher sind Katalysator- und Wassergehalt während dieses zweiten Reaktionsschrittes in der Regel ohne Relevanz.

Ein weiterer bevorzugter Gegenstand der Erfindung ist ein Verfahren zur Herstellung von silanterminierten Polymeren (Verfahrensvariante 2) der Formel (Ib)

Y²-[O-C(=O)-NH-(CR¹₂)_{b}-SiRₐ(OR²)₃₋ₐ]ₓ (Ib),

durch Umsetzung von
(a2) mindestens einem hydroxylfunktionellen Polymer, das mindestens eine Polyether-, Polyester- und/oder Polyacrylateinheit enthält,
(b2) mindestens einem Di- und/oder Polyisocyanat und
(c2) mindestens einem Isocyanatosilan der Formel

   OCN-(CR¹₂)_{b}-SiRₐ(OR²)₃₋ₐ (III)

   sowie gegebenenfalls weiteren von (a2), (b2) und (c2) unterschiedlichen Komponenten,
   wobei
   - Y²: einen x-wertigen Polyurethanrest bedeutet, der mindestens eine Polyether-, Polyester- und/oder Polyacrylateinheit enthält,
   und alle übrigen Variablen die bei Formel (I) angegebenen Bedeutungen aufweisen,
   mit den Maßgaben, dass in mindestens einem Verfahrensschritt das hydroxylfunktionelle Polymer (a2) mit dem Di- oder Polyisocyanat (b2) und/oder einem Isocyanatosilan (c2) umgesetzt wird, dass dieser Verfahrensschritt in Gegenwart von mindestens einem bismuthaltigen Katalysator (K) durchgeführt wird und dass die Reaktionsmischung zu Beginn dieses Verfahrensschrittes 50 bis 250 ppm Wasser enthält.

Bevorzugt werden bei der Herstellung der silanterminierten Polymere der Formel (Ib) außer den Komponenten (a2), (b2) und (c2) sowie Katalysator (K) und Wasser keine weiteren Komponenten mehr eingesetzt.

Bei der erfindungsgemäßen Verfahrensvariante 2 werden die Mengenverhältnisse der Komponenten (a2), (b2) und (c2) dabei vorzugsweise so gewählt, dass pro Mol Isocyanatgruppen aus Komponente (b2) und (c2), 0,5 bis 1,5 Mol, besonders bevorzugt 0,8 bis 1,3 Mol, insbesondere 0,95 bis 1,2 Mol, Hydroxylgruppen aus den Komponenten (a2) eingesetzt werden.

Bei den erfindungsgemäß eingesetzten Polyolen (a2) handelt es sich vorzugsweise um dieselben Polyole, die oben bereits als Polyole (a1) beschrieben wurden einschließlich der dort angegebenen bevorzugten Spezies.

Bei den erfindungsgemäß eingesetzten Di- und/oder Polyisocyanaten (b2) handelt es sich vorzugsweise um dieselben Di- und/oder Polyisocyanate, die oben bereits als Di- und/oder Polyisocyanate (b1) beschrieben wurden einschließlich der dort angegebenen bevorzugten Spezies.

Bevorzugt handelt es sich bei Komponente (c2) um OCN (CH₂)₃-Si(OCH₃)₃, OCN (CH₂)₃-Si(OC₂H₅)₃, OCN (CH₂)₃-Si(OCH₃)₂CH₃, OCN (CH₂)₃-Si(OC₂H₅)₂CH₃, OCN (CH₂)-Si (OCH₃)₃, OCN (CH₂)-Si (OC₂H₅)₃, OCN (CH₂)-Si (OCH₃)₂CH₃ oder OCN (CH₂)-Si (OC₂H₅)₂CH₃, wobei OCN(CH₂)₃-Si(OCH₃)₃ oder OCN(CH₂)-Si(OCH₃)₂CH₃ besonders bevorzugt sind.

Gemäß der erfindungsgemäßen Verfahrensvariante 2 können die silanterminierten Polyurethane der Formel (Ib) durch eine gleichzeitige Reaktion aller Komponenten (a2), (b2) und (c2) hergestellt werden. Oftmals wird jedoch auch hier ein mehrstufiger Prozess bevorzugt, bei dem zunächst das hydroxylfunktionelle Polymer (a2) mit Di- oder Polyisocyanat (b2) zur Reaktion gebracht wird, bevor die Reaktion mit dem Silan (c2) erfolgt.

Der einzige Unterschied zur weiter oben beschriebenen Herstellung der silanterminierten Polyurethane gemäß Verfahrensvariante 1 besteht darin, dass die Isocyanatkomponente hier im ersten Reaktionsschritt nicht im Über-, sondern im Unterschuss eingesetzt wird. Auf diese Weise wird ein hydroxylterminiertes Polyurethan erhalten, das dann in einem Folgeschritt mit dem isocyanatfunktionellen Silan (c2) umgesetzt wird.

Auch dieses Verfahren kann - ebenso wie bereits bei Verfahrensvariante 1 beschrieben - kontinuierlich oder diskontinuierlich durchgeführt werden. Hier wird Bismutkatalysator (K) in der Regel für beide Reaktionsschritte benötigt. Entscheidend ist jedoch der Wassergehalt in der Reaktionsmischung zu Beginn des ersten Reaktionsschrittes, der erfindungsgemäß von 50 bis 250 ppm liegen muss. Höhere Wassergehalte zu Reaktionsbeginn schädigen den Katalysator (K) irreversibel, so dass dieser dann beide Reaktionsschritte nicht mehr oder nur noch mit deutlich verminderter Reaktivität katalysieren kann.

Bei einer besonders bevorzugten Ausführungsform der Verfahrensvariante 2 wird durch eine Reaktion der Komponenten (a2) und (b2) ein hydroxylfunktionelles Polyurethan hergestellt, das dann mit einem Überschuss eines isocyanatfunktionellen Silans (c2) umgesetzt wird. Dabei werden auf 1 Mol im Polyurethan-Zwischenprodukt enthaltene Hydroxylgruppen vorzugsweise 1,01 bis 2,00 Mol, besonders bevorzugt 1,05 bis 1,50 Mol, insbesondere 1,05 bis 1,30 Mol, isocyanatfunktionelle Silane (c2) eingesetzt. Auf diese Weise wird nicht nur eine schnelle, sondern auch eine weitgehend vollständige Terminierung aller zuvor hydroxylfunktioneller Kettenenden erreicht.

Da bei einer derartigen Vorgehensweise nicht abreagierte isocyanatfunktionelle Silane (c2) in der Reaktionsmischung verbleiben können, werden diese nach Abschluss der Polymerherstellung vorzugsweise zum Zusatz einer isocyanatreaktiven Verbindung gequenscht. Bei dieser isocyanatreaktiven Verbindung kann es sich prinzipiell um jedwede Verbindung handeln, die über mindestens eine gegenüber Isocyanaten reaktive Gruppe verfügt. Bevorzugt werden dabei Amine oder Alkohole, besonders bevorzugt Alkohole, insbesondere niedermolekulare Alkohole wie Methanol, Ethanol, Propanol, Isopropanol, Butanol oder Isobutanol.

Bei einer diskontinuierlichen Prozessführung kann das Quenschen durch einfaches Zugeben der isocyanatreaktiven Verbindung nach Beendigung der Synthese der Polymere der Formel (Ib) erfolgen. Wird das Verfahren kontinuierlich durchgeführt, so wird auch der Quenschschritt vorzugsweise kontinuierlich durchgeführt, indem die isocyanatreaktive Verbindung nach der Herstellung der silanterminierten Polymere kontinuierlich in die Reaktionsmischung eingemischt und gegebenenfalls in einem separaten Reaktor zur Reaktion gebracht wird.

Ebenso wie die erfindungsgemäße Umsetzung selbst wird auch der Quenschschritt vorzugsweise bei Temperaturen zwischen 20°C und 180°C, besonders bevorzugt zwischen 40°C und 150°C, insbesondere zwischen 50°C und 120°C durchgeführt.

Ein weiterer bevorzugter Gegenstand der Erfindung ist ein Verfahren zur Herstellung von silanterminierten Polymeren (Verfahrensvariante 3) der Formel (Ic)

Y³-[O-C(=O)-NH-(CR¹₂)_{b}-SiRₐ(OR²)₃₋ₐ]ₓ (Ic),

durch Umsetzung von
(a3) mindestens einem hydroxylfunktionellen Polymer, das mindestens eine Polyether-, Polyester- und/oder Polyacrylateinheit enthält, und
(c3) mindestens einem Isocyanatosilan der Formel (III)
   sowie gegebenenfalls weiteren von (a3) und (c3) und der oben beschriebenen Komponente (b2) unterschiedlichen Komponenten, wobei alle Variablen die bei Formel (I) angegebene Bedeutung aufweisen und Y³ eine für Y angegebene Bedeutung hat,
   mit den Maßgaben, dass die Umsetzung des hydroxylfunktionellen Polymers (a3) mit dem Isocyanatosilan (c3) in Gegenwart von mindestens einem bismuthaltigen Katalysator (K) durchgeführt wird, und dass die Reaktionsmischung zu Beginn dieses Verfahrensschrittes 50 bis 250 ppm Wasser enthält.

Bevorzugt werden bei der Herstellung der silanterminierten Polymere der Formel (Ic) außer den Komponenten (a3) und (c3) sowie Katalysator (K) und Wasser keine weiteren Komponenten mehr eingesetzt.

Bei der erfindungsgemäßen Verfahrensvariante 3 werden die Mengenverhältnisse der Komponenten (a3) und (c3) dabei vorzugsweise so gewählt, dass pro Mol Hydroxylgruppen aus den Komponenten (a3) 0,5 bis 2,0 Mol, besonders bevorzugt 0,8 bis 1,5 Mol, insbesondere 0,95 bis 1,4 Mol, Isocyanatgruppen aus der Komponente (c3) eingesetzt werden.

Bei einer besonders bevorzugten Ausführungsform wird das hydroxylfunktionelle Polymer (a3) mit einem Überschuss an isocyanatfunktionellem Silan (c3) umgesetzt. D.h., die Mengenverhältnisse der Komponenten (a3) und (c3) werden vorzugsweise so gewählt, dass pro Mol Hydroxylgruppen aus den Komponenten (a3) 1,01 bis 1,4 Mol, besonders bevorzugt 1,05 bis 1,3 Mol, insbesondere 1,05 bis 1,2 Mol, Isocyanatgruppen aus der Komponente (c3) eingesetzt werden. Auf diese Weise wird nicht nur eine schnelle, sondern auch eine weitgehend vollständige Terminierung aller Kettenenden erreicht.

Da bei einer derartigen Vorgehensweise nicht abreagierte isocyanatfunktionelle Silane (c3) in der Reaktionsmischung verbleiben können, werden diese nach Abschluss der Polymerherstellung vorzugsweise zum Zusatz einer isocyanatreaktiven Verbindung gequenscht. Der Quenschschritt erfolgt dabei vorzugsweise auf dieselbe Weise, wie bereits bei der Verfahrensvariante 2 beschrieben wurde.

Bei den erfindungsgemäß eingesetzten Polyolen (a3) handelt es sich vorzugsweise um dieselben Polyole, die oben bereits als Polyole (a1) beschrieben wurden einschließlich der dort angegebenen bevorzugten Spezies.

Bei den erfindungsgemäß eingesetzten isocyanatfunktionellen Silanen (c3) handelt es sich vorzugsweise um dieselben Silane, die oben bereits als Silane (c2) beschrieben wurden einschließlich der dort angegebenen bevorzugten Spezies.

Auch die erfindungsgemäße Verfahrensvariante 3 kann kontinuierlich oder diskontinuierlich durchgeführt werden.

Bei den im erfindungsgemäßen Verfahren eingesetzten Komponenten kann es sich jeweils um eine Art einer solchen Komponente wie auch um ein Gemisch aus mindestens zwei Arten einer jeweiligen Komponente handeln.

Das erfindungsgemäße Verfahren hat den Vorteil, dass es schnell und einfach in der Durchführung ist, wobei leicht verfügbare Rohstoffe als Edukte eingesetzt werden.

Des Weiteren besitzt das erfindungsgemäße Verfahren den Vorteil, dass die entsprechend hergestellten silanvernetzbaren Polymere vergleichsweise lagerstabil sind und ohne Zugabe eines zusätzlichen Härtungskatalysators nur sehr langsam mit Luftfeuchtigkeit reagieren. Dies erleichtert nicht nur ihre Lagerung, sondern auch ihre Weiterverarbeitung.

Ein weiterer Vorteil des erfindungsgemäßen Verfahrens ist, dass die hergestellten Polymere direkt weiterverwendet werden können, z.B. bei der Herstellung von vernetzbaren Massen.

Die erfindungsgemäß hergestellten silanterminierten Polymere können überall dort eingesetzt werden, wo auch bisher silanterminierte Polymere eingesetzt wurden.

Insbesondere eignen sie sich zur Verwendung in vernetzbaren Massen, insbesondere in raumtemperaturhärtbaren Kleb- und Dichtstoffen sowie von Beschichtungen. Die Herstellung von silanvernetzenden Beschichtungen, Kleb- und Dichtstoffen aus entsprechenden Polymeren ist in der Literatur bereits vielfach beschrieben, z.B. in EP 1535940, EP 2785755, EP 2744842 oder EP 2561024. Die in diesen Dokumenten beschriebenen feuchtigkeitshärtenden Formulierungen auf Basis von silanterminierten Polymeren, die dabei zum Einsatz kommenden weiteren Inhaltsstoffe, sowie die dort beschriebenen Verfahren zur Herstellung entsprechender Formulierungen sind ebenso zum Offenbarungsgehalt dieser Beschreibung zu rechnen, wie die dort beschriebenen Anwendungen für die fertig formulierten Beschichtungen, Kleb- und Dichtstoffe.

In den nachstehend beschriebenen Beispielen beziehen sich alle Viskositätsangaben auf eine Temperatur von 20°C. Sofern nicht anders angegeben, werden die nachstehenden Beispiele bei einem Druck der umgebenden Atmosphäre, also bei etwa 1000 hPa, und Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt.

### Vergleichsbeispiel 1 (nicht erfindungsgemäß)

In einem 1000 ml Reaktionsgefäß mit Rühr-, Kühl- und Heizmöglichkeiten werden 469,0 g eines hydroxyterminierten Polypropylenglycols mit einer mittleren Molmasse Mₙ von 12 000 g/Mol (käuflich erhältlich unter der Bezeichnung Acclaim 12200 von der Fa. Covestro AG, D-Leverkusen) vorgelegt und für 2 h bei 80°C und 1 mbar unter Rühren getrocknet. Ein deutliches Aufschäumen während der ersten 15-30 min der Trocknungsdauer zeigt dabei das Entweichen von Feuchtigkeitsspuren aus dem Polyol an.

Danach wird das Vakuum mit Argon gebrochen. Die gesamte folgende Reaktion wird unter einer Argon-Schutzgasatmosphäre durchgeführt.

Dem getrockneten Polyether werden 5 g entnommen. Diese werden für eine Bestimmung des Wassergehaltes mittels einer sogenannten Karl-Fischer-Analyse entsprechend DIN 51777, Absätze 4.3 und 4.1.2 (Version von 2016-08) verwendet. Er liegt bei 34 ppm (34 Gewichtsteile Wasser auf 1 000 000 Gewichtsteile Polyol). Die im Reaktionsgefäß verbliebenen 464,0 g (77,3 mMol) Polyether weisen somit denselben Wassergehalt auf. Bezogen auf die gesamte Reaktionsmischung ergibt sich daraus ein Wassergehalt von knapp 33 ppm.

Zur Durchführung der Silanterminierung werden dem getrockneten Polyether bei 80°C zunächst 22,85 g Isocyanatomethyl-methyldimethoxysilan (GENIOSIL® XL 42 der Wacker Chemie AG, D-München) zugetropft und anschließend 0,071 g OMG-Katalysator 315 (ein Bismut-Neodecanoat-haltiger Katalysator der Fa. OMG Borchers) mittels einer Eppendorf-Pipette zugegeben. Dies entspricht einem Wert von 150 ppm Katalysator bezogen auf das Gesamtgewicht der Reaktionsmischung. Direkt nach der Katalysatorzugabe kommt es zu einer Erwärmung der Reaktionsmischung auf 84-85°C. Danach wird bei einer Temperatur von 80°C gerührt.

Nach 60 min wird der Reaktionsmischung eine Probe entnommen und mittels IR-Analytik auf gegebenenfalls noch vorhandene Isocyanatosilanreste untersucht. Die Probe ist isocyanatfrei, die Reaktion ist somit innerhalb einer für ein technisches Verfahren geeigneten Reaktionszeit vollständig abgelaufen.

### Beispiel 1

Es wird ebenso vorgegangen wie in Vergleichsbeispiel 1, mit dem einzigen Unterschied, dass dem Polypropylenglycol nach der Trocknung und vor der Zugabe des Isocyanatosilans und des Katalysators 100 ppm Wasser mittels einer Eppendorf-Pipette zugegeben werden. Entsprechend der o.g. Karl-Fischer-Analytik ergibt sich ein Wassergehalt im Polyol von 128 ppm. Bezogen auf die gesamte Reaktionsmischung ergibt sich daraus ein Wassergehalt von knapp 124 ppm.
Ebenso wie in Vergleichsbeispiel 1 kommt es auch hier direkt nach der Katalysatorzugabe zu einer Erwärmung der Reaktionsmischung auf ca. 84°C. Danach wird bei einer Temperatur von 80°C gerührt.

60 min nach der Katalysatorzugabe wird der Reaktionsmischung eine Probe entnommen und mittels IR-Analytik auf gegebenenfalls noch vorhandene Isocyanatosilanreste untersucht. Die Probe ist isocyanatfrei, die Reaktion ist somit trotz des höheren Wassergehaltes innerhalb einer für ein technisches Verfahren geeigneten Reaktionszeit vollständig abgelaufen.

### Beispiel 2

Es wird ebenso vorgegangen wie in Vergleichsbeispiel 1, mit dem einzigen Unterschied, dass dem Polypropylenglycol nach der Trocknung und vor der Zugabe des Isocyanatosilans und des Katalysators 150 ppm Wasser mittels einer Eppendorf-Pipette zugegeben werden. Entsprechend der o.g. Karl-Fischer-Analytik ergibt sich ein Wassergehalt im Polyol von 197 ppm. Bezogen auf die gesamte Reaktionsmischung ergibt sich daraus ein Wassergehalt von etwas mehr als 190 ppm.

Ebenso wie in Vergleichsbeispiel 1 kommt es auch hier direkt nach der Katalysatorzugabe zu einer Erwärmung der Reaktionsmischung auf ca. 84°C. Danach wird bei einer Temperatur von 80 C gerührt.

60 min nach der Katalysatorzugabe wird der Reaktionsmischung eine Probe entnommen und mittels IR-Analytik auf gegebenenfalls noch vorhandene Isocyanatosilanreste untersucht. Die Probe ist isocyanatfrei, die Reaktion ist somit trotz des höheren Wassergehaltes innerhalb einer für ein technisches Verfahren geeigneten Reaktionszeit vollständig abgelaufen.

### Vergleichsbeispiel 2 (nicht erfindungsgemäß)

Es wird ebenso vorgegangen wie in Vergleichsbeispiel 1, mit dem einzigen Unterschied, dass dem Polypropylenglycol nach der Trocknung und vor der Zugabe des Isocyanatosilans und des Katalysators 300 ppm Wasser mittels einer Eppendorf-Pipette zugegeben werden. Entsprechend der o.g. Karl-Fischer-Analytik ergibt sich ein Wassergehalt im Polyol von 336 ppm. Bezogen auf die gesamte Reaktionsmischung ergibt sich daraus ein Wassergehalt von etwas mehr als 325 ppm.

Anders als in Vergleichsbeispiel 1 ist hier jedoch nach der Katalysatorzugabe keine signifikante Erwärmung der Reaktionsmischung mehr feststellbar.

60 min nach der Katalysatorzugabe wird der Reaktionsmischung eine Probe entnommen und mittels IR-Analytik auf gegebenenfalls noch vorhandene Isocyanatosilanreste untersucht. Eine deutlich erkennbare Bande bei einer Wellenzahl von 2265 cm⁻¹ zeigt dabei das Vorhandensein von noch nicht abreagiertem Isocyanatosilan an.

Die Reaktion wird unter Rühren bei einer Reaktionstemperatur von 80°C fortgesetzt. Die o.g. Isocyanatbande ist jedoch auch nach Reaktionszeiten von 1½, 2, 3 und 4 h noch vorhanden. Erst nach einer im Vergleich zu den Beispielen 1 und 2 dramatisch verlängerten Reaktionszeit von 5 h ist die Isocyanatbande verschwunden und die Reaktion somit vollständig abgelaufen.

### Vergleichsbeispiel 3 (nicht erfindungsgemäß)

Es wird ebenso vorgegangen wie in Vergleichsbeispiel 2. Nach der Zugabe von 300 ppm Wasser zum Polypropylenglycol ergab sich ein Wassergehalt von 331 ppm. Bezogen auf die gesamte Reaktionsmischung ergibt sich daraus ein Wassergehalt von ca. 320 ppm.

Der einzige Unterschied zu Vergleichsbeispiel 2 besteht darin, dass hier die doppelte Menge des OMG 315-Katalysators (0,142 g, 300 ppm bezogen auf die Reaktionsmischung) zugegeben wird.

Trotzdem ist auch hier ebenso wie in Vergleichsbeispiel 2 nach der Katalysatorzugabe keine signifikante Erwärmung der Reaktionsmischung feststellbar.

60 min nach der Katalysatorzugabe wird der Reaktionsmischung eine Probe entnommen und mittels IR-Analytik auf gegebenenfalls noch vorhandene Isocyanatosilanreste untersucht. Eine deutlich erkennbare Bande bei einer Wellenzahl von 2265 cm⁻¹ zeigt dabei das Vorhandensein von noch nicht abreagiertem Isocyanatosilan an.

Die Reaktion wird unter Rühren bei einer Reaktionstemperatur von 80°C fortgesetzt. Die o.g. Isocyanatbande ist jedoch auch nach Reaktionszeiten von 1½, 2 und 3 h noch vorhanden. Erst nach einer im Vergleich zu den zu Vergleichsbeispiel 2 nur geringfügig reduzierten und nach wie vor für einen kostengünstigen technischen Prozess zu langen Reaktionszeit von 4 h ist die Isocyanatbande verschwunden und die Reaktion somit vollständig abgelaufen.

## Patentansprüche

1. Verfahren zur Herstellung von silanterminierten Polymeren der Formel (I)
Y-[Z-C(=O)-NR³-(CR¹₂)_{b}-SiRₐ(OR²)₃₋ₐ]ₓ (I),
wobei
Y einen x-wertigen Polymerrest bedeutet, der mindestens eine Polyether-, Polyester- und/oder Polyacrylateinheit enthält,
R gleich oder verschieden sein kann und einen einwertigen, gegebenenfalls substituierten, SiC-gebundenen Kohlenwasserstoffrest darstellt,
R¹ gleich oder verschieden sein kann und Wasserstoffatom oder einen einwertigen, gegebenenfalls substituierten Kohlenwasserstoffrest darstellt,
R² gleich oder verschieden sein kann und Wasserstoffatom oder einen einwertigen, gegebenenfalls substituierten Kohlenwasserstoffrest darstellt,
R³ gleich oder verschieden sein kann und Wasserstoffatom, einen einwertigen, gegebenenfalls substituierten Kohlenwasserstoffrest, eine Gruppe -(CR¹₂)_{b}-SiRₐ(OR²)₃₋ₐ oder eine Gruppe -CH(COOR')-CH₂-COOR' bedeutet,
R' gleich oder verschieden sein kann und einen einwertigen, gegebenenfalls substituierten Kohlenwasserstoffrest darstellt,
Z gleich oder verschieden sein kann und NH oder ein Sauerstoffatom bedeutet,
x eine ganze Zahl von 1 bis 50 ist,
a gleich oder verschieden sein kann und 0, 1 oder 2 ist und
b gleich oder verschieden sein kann und eine ganze Zahl von 1 bis 10 ist,
durch Umsetzung von mindestens einem hydroxylfunktionellen Polymer (a), das mindestens eine Polyether-, Polyester- und/oder Polyacrylateinheit enthält, mit mindestens einer Verbindung, die über mindestens eine Isocyanatgruppe verfügt, in Gegenwart von mindestens einem bismuthaltigen Katalysator (K), mit der Maßgabe, dass die Reaktionsmischung zu Reaktionsbeginn 50 bis 250 ppm Wasser, wie in der Beschreibung bestimmt, enthält.

2. Verfahren nach Anspruch 1, **dadurch gekennzeichnet, dass** es bei Temperaturen zwischen 20°C und 180°C durchgeführt wird.

3. Verfahren nach Anspruch 1 oder 2, **dadurch gekennzeichnet, dass** es sich um ein solches handelt zur Herstellung von silanterminierten Polymeren (Verfahrensvariante 1) der Formel (Ia)
Y¹-[NH-C(=O)-NR³-(CR¹₂)_{b}-SiRₐ(OR²)₃₋ₐ]ₓ (Ia),
durch Umsetzung von
(a1) mindestens einem hydroxylfunktionellen Polymer, das mindestens eine Polyether-, Polyester- und/oder Polyacrylateinheit enthält,
(b1) mindestens einem Di- und/oder Polyisocyanat und
(c1) mindestens einem Aminosilan der Formel
HNR³-(CR¹₂)_{b}-SiRₐ(OR²)₃₋ₐ (II)
sowie gegebenenfalls weiteren von (a1), (b1) und (c1) unterschiedlichen Komponenten,
wobei
Y¹ einen x-wertigen Polyurethanrest bedeutet, der mindestens eine Polyether-, Polyester- und/oder Polyacrylateinheit enthält,
und alle übrigen Variablen die bei Formel (I) angegebene Bedeutung aufweisen,
mit den Maßgaben, dass in mindestens einem Verfahrensschritt das hydroxylfunktionelle Polymer (a1) mit dem Di- oder Polyisocyanate (b1) oder einem isocyanatfunktinellen Folgeprodukt, welches aus einer Reaktion des Di- oder Polyisocyanate (b1) und des Aminosilan (c1) entstanden ist, umgesetzt wird, dass dieser Verfahrensschritt in Gegenwart von mindestens einem bismuthaltigen Katalysator (K) durchgeführt wird, und dass die Reaktionsmischung zu Beginn dieses Verfahrensschrittes 50 bis 250 ppm Wasser enthält.

4. Verfahren nach Anspruch 3, **dadurch gekennzeichnet, dass** die Mengenverhältnisse der Komponenten (a1), (b1) und (c1) so gewählt werden, dass pro Mol Isocyanatgruppen aus Komponente (b1), 0,5 bis 1,5 Mol isocyanatreaktive Gruppen aus den Komponenten (a1) und (c1) eingesetzt werden.

5. Verfahren nach Anspruch 3 oder 4, **dadurch gekennzeichnet, dass** es sich bei Komponente (c1) um cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)-Si (OCH₃)₃, cyclo-C₆H₁₁NH(CH₂)-Si (OC₂H₅)₃, cyclo-C₆H₁₁NH(CH₂)-Si (OCH₃)₂CH₃, cyclo-C₆H₁₁NH(CH₂)-Si (OC₂H₅)₂CH₃, Phenyl-NH (CH₂)₃-Si(OCH₃)₃, Phenyl-NH (CH₂)₃-Si(OC₂H₅)₃, Phenyl-NH (CH₂)₃-Si(OCH₃)₂CH₃, Phenyl-NH (CH₂)₃-Si(OC₂H₅)₂CH₃, Phenyl-NH (CH₂)-Si (OCH₃)₃, Phenyl-NH (CH₂)-Si (OC₂H₅)₃, Phenyl-NH (CH₂)-Si (OCH₃)₂CH₃, Phenyl-NH (CH₂)-Si (OC₂H₅)₂CH₃, Alkyl-NH(CH₂)₃-Si(OCH₃)₃, Alkyl-NH (CH₂)₃-Si(OC₂H₅)₃, Alkyl-NH (CH₂)₃-Si(OCH₃)₂CH₃, Alkyl-NH (CH₂)₃-Si(OC₂H₅)₂CH₃, Alkyl-NH(CH₂)-Si(OCH₃)₃, Alkyl-NH (CH₂)-Si (OC₂H₅)₃, Alkyl-NH (CH₂)-Si(OCH₃)₂CH₃ oder Alkyl-NH(CH₂)-Si(OC₂H₅)₂CH₃ handelt, wobei "Alkyl" vorzugsweise für Ethyl-, n-Propyl-, i-Propyl-, n-Butyl-, i-Butyl-, t-Butyl- sowie die verschiedenen Sterioisomere des Pentyl-, Hexyl-, Heptyl- oder Octylrestes steht.

6. Verfahren nach Anspruch 1 oder 2, **dadurch gekennzeichnet, dass** es sich um ein solches handelt zur Herstellung von silanterminierten Polymeren (Verfahrensvariante 2) der Formel (Ib)
Y²-[O-C(=O)-NH-(CR¹₂)_{b}-SiRₐ(OR²)₃₋ₐ]ₓ (Ib),
durch Umsetzung von
(a2) mindestens einem hydroxylfunktionellen Polymer, das mindestens eine Polyether-, Polyester- und/oder Polyacrylateinheit enthält,
(b2) mindestens einem Di- und/oder Polyisocyanat und
(c2) mindestens einem Isocyanatosilan der Formel
OCN-(CR¹₂)_{b}-SiRₐ(OR²)₃₋ₐ (III)
sowie gegebenenfalls weiteren von (a2), (b2) und (c2) unterschiedlichen Komponenten,
wobei
Y² einen x-wertigen Polyurethanrest bedeutet, der mindestens eine Polyether-, Polyester- und/oder Polyacrylateinheit enthält,
und alle übrigen Variablen die bei Formel (I) angegebenen Bedeutungen aufweisen,
mit den Maßgaben, dass in mindestens einem Verfahrensschritt das hydroxylfunktionelle Polymer (a2) mit dem Di- oder Polyisocyanate (b2) und/oder einem Isocyanatosilan (c2) umgesetzt wird, dass dieser Verfahrensschritt in Gegenwart von mindestens einem bismuthaltigen Katalysator (K) durchgeführt wird und dass die Reaktionsmischung zu Beginn dieses Verfahrensschrittes 50 bis 250 ppm Wasser enthält.

7. Verfahren nach Anspruch 6, **dadurch gekennzeichnet, dass** die Mengenverhältnisse der Komponenten (a2), (b2) und (c2) dabei so gewählt werden, dass pro Mol Isocyanatgruppen aus Komponente (b2) und (c2), 0,5 bis 1,5 Mol Hydroxylgruppen aus den Komponenten (a2) eingesetzt werden.

8. Verfahren nach Anspruch 6 oder 7, **dadurch gekennzeichnet, dass** es sich bei Komponente (c2) um
OCN (CH₂)₃-Si(OCH₃)₃, OCN (CH₂)₃-Si(OC₂H₅)₃, OCN (CH₂)₃-Si(OCH₃)₂CH₃, OCN (CH₂)₃-Si(OC₂H₅)₂CH₃, OCN (CH₂)-Si (OCH₃)₃, OCN (CH₂)-Si (OC₂H₅)₃, OCN (CH₂)-Si (OCH₃)₂CH₃ oder OCN (CH₂)-Si (OC₂H₅)₂CH₃ handelt.

9. Verfahren nach Anspruch 1 oder 2, **dadurch gekennzeichnet, dass** es sich um ein solches handelt zur Herstellung von silanterminierten Polymeren (Verfahrensvariante 3) der Formel (Ic)
Y³-[O-C(=O)-NH-(CR¹₂)_{b}-SiRₐ(OR²)₃₋ₐ]ₓ (Ic),
durch Umsetzung von
(a3) mindestens einem hydroxylfunktionellen Polymer, das mindestens eine Polyether-, Polyester- und/oder Polyacrylateinheit enthält, und
(c3) mindestens einem Isocyanatosilan der Formel (III) sowie gegebenenfalls weiteren von (a3) und (c3) und der oben beschriebenen Komponente (b2) unterschiedlichen Komponenten, wobei alle Variablen die bei Formel (I) angegebene Bedeutung aufweisen und Y³ eine für Y angegebene Bedeutung hat,
mit den Maßgaben, dass die Umsetzung des hydroxylfunktionellen Polymers (a3) mit dem Isocyanatosilan (c3) in Gegenwart von mindestens einem bismuthaltigen Katalysator (K) durchgeführt wird, und dass die Reaktionsmischung zu Beginn dieses Verfahrensschrittes 50 bis 250 ppm Wasser enthält.

10. Verfahren nach Anspruch 9, **dadurch gekennzeichnet, dass** die Mengenverhältnisse der Komponenten (a3) und (c3) dabei so gewählt werden, dass pro Mol Hydroxylgruppen aus den Komponenten (a3) 0,5 bis 2,0 Mol Isocyanatgruppen aus der Komponente (c3) eingesetzt werden.

11. Verfahren nach Anspruch 9 oder 10, **dadurch gekennzeichnet, dass** das hydroxylfunktionelle Polymer (a3) mit einem Überschuss an isocyanatfunktionellem Silan (c3) umgesetzt wird.

## Claims

1. Method for producing silane-terminated polymers of the formula (I)
Y-[Z-C(=O)-NR³-(CR¹₂)_{b}-SiRₐ(OR²)₃₋ₐ]ₓ (I),
wherein
Y is an x-valent polymer radical comprising at least one polyether, polyester and/or polyacrylate unit,
R may be identical or different and is a monovalent, optionally substituted, SiC-bonded hydrocarbon radical, R¹ may be identical or different and is a hydrogen atom or a monovalent, optionally substituted hydrocarbon radical,
R² may be identical or different and is a hydrogen atom or a monovalent, optionally substituted hydrocarbon radical,
R³ may be identical or different and is a hydrogen atom, a monovalent, optionally substituted hydrocarbon radical, a - (CR¹₂)_{b}-SiRₐ(OR²)₃₋ₐ group or a -CH(COOR')-CH₂-COOR' group,
R' may be identical or different and is a monovalent, optionally substituted hydrocarbon radical,
Z may be identical or different and is NH or an oxygen atom,
x is an integer from 1 to 50,
a may be identical or different and is 0, 1 or 2 and
b may be identical or different and is an integer from 1 to 10,
by reacting at least one hydroxy-functional polymer (a), comprising at least one polyether, polyester and/or polyacrylate unit, with at least one compound having at least one isocyanate group, in the presence of at least one bismuth-containing catalyst (K), with the proviso that the reaction mixture comprises 50 to 250 ppm water at the start of the reaction, as determined in the description.

2. Method according to Claim 1, **characterized in that** said method is carried out at temperatures between 20°C and 180°C.

3. Method according to Claims 1 or 2, **characterized in that** said method is such that it is intended for producing silane-terminated polymers (method variant 1) of the formula (Ia)
Y¹-[NH-C(=O)-NR³-(CR¹₂)_{b}-SiRₐ(OR²)₃₋ₐ]ₓ (Ia),
by reacting
(a1) at least one hydroxy-functional polymer comprising at least one polyether, polyester and/or polyacrylate unit,
(b1) at least one di- and/or polyisocyanate and
(c1) at least one aminosilane of the formula
HNR³-(CR¹₂)_{b}-SiRₐ(OR²)₃₋ₐ (II)
and optionally further components different from (a1), (b1) and (c1),
wherein
Y¹ is an x-valent polyurethane radical comprising at least one polyether, polyester and/or polyacrylate unit,
and all other variables having the definition specified in formula (I),
with the provisos that, in at least one method step, the hydroxy-functional polymer (a1) is reacted with the di- or polyisocyanates (b1) or an isocyanate-functional conversion product, which is produced from a reaction of the di- or polyisocyanates (b1) and the aminosilane (c1), that this method step is carried out in the presence of at least one bismuth-containing catalyst (K), and that the reaction mixture comprises 50 to 250 ppm water at the start of this reaction step.

4. Method according to Claim 3, **characterized in that** the ratios by weight of the components (a1), (b1) and (c1) are selected such that 0.5 to 1.5 mol of isocyanate-reactive groups of the components (a1) and (c1) are used per mole of isocyanate groups of component (b1).

5. Method according to Claim 3 or 4, **characterized in that** component (c1) is cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)-Si (OCH₃)₃, cyclo-C₆H₁₁NH(CH₂)-Si(OC₂H₅)₃, cyclo-C₆H₁₁NH(CH₂)-Si (OCH₃)₂CH₃, cyclo-C₆H₁₁NH(CH₂)-Si(OC₂H₅)₂CH₃, phenyl-NH (CH₂)₃-Si(OCH₃)₃, phenyl-NH (CH₂)₃-Si(OC₂H₅)₃, phenyl-NH (CH₂)₃-Si(OCH₃)₂CH₃, phenyl-NH (CH₂)₃-Si(OC₂H₅)₂CH₃, phenyl-NH (CH₂)-Si (OCH₃)₃, phenyl-NH (CH₂)-Si (OC₂H₅)₃, phenyl-NH (CH₂)-Si (OCH₃)₂CH₃, phenyl-NH (CH₂)-Si (OC₂H₅)₂CH₃, alkyl-NH (CH₂)₃-Si(OCH₃)₃, alkyl-NH (CH₂)₃-Si(OC₂H₅)₃, alkyl-NH (CH₂)₃-Si(OCH₃)₂CH₃, alkyl-NH (CH₂)₃-Si(OC₂H₅)₂CH₃, alkyl-NH(CH₂)-Si(OCH₃)₃, alkyl-NH(CH₂)-Si(OC₂H₅)₃, alkyl-NH (CH₂)-Si (OCH₃)₂CH₃ or alkyl-NH (CH₂)-Si (OC₂H₅)₂CH₃, wherein "alkyl" is preferably an ethyl, n-propyl, isopropyl, n-butyl, isobutyl or t-butyl radical and also the various stereoisomers of the pentyl, hexyl, heptyl or octyl radical.

6. Method according to Claim 1 or 2, **characterized in that** said method is such that it is intended for producing silane-terminated polymers (method variant 2) of the formula (Ib)
Y²-[O-C(=O)-NH-(CR¹₂)_{b}-SiRₐ(OR²)₃₋ₐ]ₓ (Ib),
by reacting
(a2) at least one hydroxy-functional polymer comprising at least one polyether, polyester and/or polyacrylate unit,
(b2) at least one di- and/or polyisocyanate and
(c2) at least one isocyanatosilane of the formula
OCN-(CR¹₂)_{b}-SiRₐ(OR²)₃₋ₐ (III)
and optionally further components different from (a2), (b2) and (c2),
wherein
Y² is an x-valent polyurethane radical comprising at least one polyether, polyester and/or polyacrylate unit,
and all other variables having the definition specified in formula (I),
with the provisos that, in at least one method step, the hydroxy-functional polymer (a2) is reacted with the di- or polyisocyanates (b2) and/or an isocyanatosilane (c2), that this method step is carried out in the presence of at least one bismuth-containing catalyst (K) and that the reaction mixture comprises 50 to 250 ppm water at the start of this method step.

7. Method according to Claim 6, **characterized in that** the ratios by weight of the components (a2), (b2) and (c2) are selected in this case such that 0.5 to 1.5 mol of hydroxyl groups of the components (a2) are used per mole of isocyanate groups of components (b2) and (c2).

8. Method according to Claim 6 or 7, **characterized in that** component (c2) is OCN (CH₂)₃-Si(OCH₃)₃, OCN (CH₂)₃-Si(OC₂H₅)₃, OCN (CH₂)₃-Si(OCH₃)₂CH₃, OCN (CH₂)₃-Si(OC₂H₅)₂CH₃, OCN (CH₂)-Si (OCH₃)₃, OCN (CH₂)-Si (OC₂H₅)₃, OCN (CH₂)-Si (OCH₃)₂CH₃ or OCN (CH₂)-Si(OC₂H₅)₂CH₃.

9. Method according to Claim 1 or 2, **characterized in that** said method is such that it is intended for producing silane-terminated polymers (method variant 3) of the formula (Ic)
Y³-[O-C(=O)-NH-(CR¹₂)_{b}-SiRₐ(OR²)₃₋ₐ]ₓ (Ic),
by reacting
(a3) at least one hydroxy-functional polymer comprising at least one polyether, polyester and/or polyacrylate unit, and
(c3) at least one isocyanatosilane of the formula (III) and optionally further components different from (a3) and (c3) and the component (b2) described above,
wherein all variables have the definition specified in formula (I) and Y³ has the definition specified for Y,
with the provisos that the reaction of the hydroxy-functional polymer (a3) with the isocyanatosilane (c3) is carried out in the presence of at least one bismuth-containing catalyst (K), and that the reaction mixture comprises 50 to 250 ppm water at the start of this method step.

10. Method according to Claim 9, **characterized in that** the ratios by weight of the components (a3) and (c3) are selected in this case such that 0.5 to 2.0 mol of isocyanate groups of the component (c3) are used per mole of hydroxyl groups of the components (a3).

11. Method according to Claim 9 or 10, **characterized in that** the hydroxy-functional polymer (a3) is used with an excess of isocyanate-functional silane (c3).

## Revendications

1. Procédé pour la préparation de polymères de formule (I) terminés par un silane
Y-[Z-C(=O)-NR³-(CR¹₂)_{b}-SiRₐ(OR²)₃₋ₐ]ₓ (I),
Y signifiant un radical de polymère x-valent, qui contient au moins un motif de type polyéther, polyester et/ou polyacrylate,
R pouvant être identique ou différent et représentant un radical hydrocarboné monovalent, éventuellement substitué, lié par SiC,
R¹ pouvant être identique ou différent et représentant un atome d'hydrogène ou un radical hydrocarboné monovalent, éventuellement substitué,
R² pouvant être identique ou différent et représentant un atome d'hydrogène ou un radical hydrocarboné monovalent, éventuellement substitué,
R³ pouvant être identique ou différent et signifiant un atome d'hydrogène, un radical hydrocarboné monovalent, éventuellement substitué, un groupe -(CR¹₂)_{b}-SiRₐ(OR²)₃₋ₐ ou un groupe -CH(COOR')-CH₂-COOR',
R' pouvant être identique ou différent et représentant un radical hydrocarboné monovalent, éventuellement substitué,
Z pouvant être identique ou différent et signifiant NH ou un atome d'oxygène,
x étant un nombre entier de 1 à 50,
a pouvant être identique ou différent et étant 0, 1 ou 2 et
b pouvant être identique ou différent et étant un nombre entier de 1 à 10,
par transformation d'au moins un polymère (a) fonctionnalisé par hydroxyle, qui contient au moins un motif de type polyéther, polyester et/ou polyacrylate, avec au moins un composé qui dispose d'au moins un groupe isocyanate, en présence d'au moins un catalyseur (K) contenant du bismuth, à la condition que le mélange réactionnel contienne, au début de la réaction, 50 à 250 ppm d'eau, comme déterminé dans la description.

2. Procédé selon la revendication 1, **caractérisé en ce qu'**il est mis en œuvre à des températures comprises entre 20 °C et 180 °C.

3. Procédé selon la revendication 1 ou 2, caractérisé en qu'il s'agit d'un procédé pour la préparation de polymères de formule (la) terminés par un silane (variante de procédé 1)
Y¹-[NH-C(=O)-NR³-(CR¹₂)_{b}-SiRₐ(OR²)₃₋ₐ]ₓ (Ia),
par transformation
(a1) d'au moins un polymère fonctionnalisé par hydroxyle, qui contient au moins un motif de type polyéther, polyester et/ou polyacrylate,
(b1) d'au moins un diisocyanate et/ou polyisocyanate et
(c1) d'au moins un aminosilane de formule
HNR³-(CR¹₂)_{b}-SiRₐ(OR²)₃₋ₐ (II)
ainsi qu'éventuellement d'autres composants différents de (a1), (b1) et (c1),
Y¹ signifiant un radical de polyuréthane x-valent, qui contient au moins un motif de type polyéther, polyester et/ou polyacrylate,
et toutes les autres variables présentant la signification indiquée pour la formule (I)
avec les conditions que dans au moins une étape de procédé, le polymère fonctionnalisé par hydroxyle (a1) est transformé avec le diisocyanate ou polyisocyanate (b1) ou avec un produit dérivé fonctionnalisé par isocyanate, qui a été généré par une réaction du diisocyanate ou polyisocyanate (b1) et de l'aminosilane (c1), que cette étape de procédé est mise en œuvre en présence d'au moins un catalyseur (K) contenant du bismuth, et que le mélange réactionnel, au début de cette étape de procédé, contient 50 à 250 ppm d'eau.

4. Procédé selon la revendication 3, **caractérisé en ce que** les rapports de quantités des composants (a1), (b1) et (c1) sont choisis de telle manière que par mole de groupes isocyanate du composant (b1), 0,5 à 1,5 mole de groupes réactifs envers un isocyanate des composants (a1) et (c1) est utilisée.

5. Procédé selon la revendication 3 ou 4, **caractérisé en ce que** le composant (c1) est cyclo-C₆H₁₁NH(CH₂)₃-Si (OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)-Si (OCH₃)₃, cyclo-C₆H₁₁NH(CH₂)-Si (OC₂H₅)₃, cyclo-C₆H₁₁NH(CH₂)-Si (OCH₃)₂CH₃, cyclo-C₆H₁₁NH(CH₂)-Si (OC₂H₅)₂CH₃, phényl-NH (CH₂)₃-Si(OCH₃)₃, phényl-NH (CH₂)₃-Si(OC₂H₅)₃, phényl-NH (CH₂)₃-Si(OCH₃)₂CH₃, phényl-NH (CH₂)₃-Si(OC₂H₅)₂CH₃, phényl-NH (CH₂)-Si(OCH₃)₃, phényl-NH(CH₂)-Si(OC₂H₅)₃, phényl-NH(CH₂)-Si (OCH₃)₂CH₃, phényl-NH (CH₂)-Si (OC₂H₅)₂CH₃, alkyl-NH(CH₂)₃-Si(OCH₃)₃, alkyl-NH (CH₂)₃-Si(OC₂H₅)₃, alkyl-NH (CH₂)₃-Si(OCH₃)₂CH₃, alkyl-NH (CH₂)₃-Si(OC₂H₅)₂CH₃, alkyl-NH (CH₂)-Si (OCH₃)₃, alkyl-NH (CH₂)-Si (OC₂H₅)₃, alkyl-NH (CH₂)-Si (OCH₃)₂CH₃ ou alkyl-NH (CH₂)-Si(OC₂H₅)₂CH₃, « alkyl » représentant de préférence un radical éthyle, n-propyle, isopropyle, n-butyle, isobutyle ou t-butyle ainsi que les différents stéréoisomère du radical pentyle, hexyle, heptyle ou octyle.

6. Procédé selon la revendication 1 ou 2, caractérisé en qu'il s'agit d'un procédé pour la préparation de polymères de formule (Ib) terminés par un silane (variante de procédé 2)
Y²-[O-C(=O)-NH-(CR¹₂)_{b}-SiRₐ(OR²)₃₋ₐ]ₓ (Ib),
par transformation
(a2) d'au moins un polymère fonctionnalisé par hydroxyle, qui contient au moins un motif de type polyéther, polyester et/ou polyacrylate,
(b2) d'au moins un diisocyanate et/ou polyisocyanate et
(c2) d'au moins un isocyanatosilane de formule
OCN-(CR¹₂)_{b}-SiRₐ(OR²)₃₋ₐ (III)
ainsi qu'éventuellement d'autres composants différents de (a2), (b2) et (c2),
Y² signifiant un radical de polyuréthane x-valent, qui contient au moins un motif de type polyéther, polyester et/ou polyacrylate,
et toutes les autres variables présentant la signification indiquée pour la formule (I)
avec les conditions que dans au moins une étape de procédé le polymère fonctionnalisé par hydroxyle (a2) est transformé avec le diisocyanate ou polyisocyanate (b2) et/ou avec un isocyanatosilane (c2), que cette étape de procédé est mise en œuvre en présence d'au moins un catalyseur (K) contenant du bismuth, et que le mélange réactionnel, au début de cette étape de procédé, contient 50 à 250 ppm d'eau.

7. Procédé selon la revendication 6, **caractérisé en ce que** les rapports de quantités des composants (a2), (b2) et (c2) sont choisis de telle manière que par mole de groupes isocyanate du composant (b2) et (c2), 0,5 à 1,5 mole de groupes hydroxyle du composant (a2) sont utilisée.

8. Procédé selon la revendication 6 ou 7, **caractérisé en ce que** le composant (c2) est OCN (CH₂)₃-Si(OCH₃)₃, OCN (CH₂)₃-Si(OC₂H₅)₃, OCN (CH₂)₃-Si(OCH₃)₂CH₃, OCN (CH₂)₃-Si(OC₂H₅)₂CH₃, OCN (CH₂)-Si (OCH₃)₃, OCN(CH₂)-Si (OC₂H₅)₃, OCN (CH₂)-Si (OCH₃)₂CH₃ ou OCN (CH₂)-Si (OC₂H₅)₂CH₃.

9. Procédé selon la revendication 1 ou 2, caractérisé en qu'il s'agit d'un procédé pour la préparation de polymères de formule (Ic) terminés par un silane (variante de procédé 3)
Y³-[O-C(=O)-NH-(CR¹₂)_{b}-SiRₐ(OR²)₃₋ₐ]ₓ (Ic),
par transformation
(a3) d'au moins un polymère fonctionnalisé par hydroxyle, qui contient au moins un motif de type polyéther, polyester et/ou polyacrylate, et
(c3) d'au moins un isocyanatosilane de formule (III)
ainsi qu'éventuellement d'autres composants différents de (a3) et (c3) et du composant (b2) décrit ci-dessus,
toutes les variables présentant la signification indiquée pour la formule (I) et Y³ possédant une signification indiquée pour Y,
avec les conditions que la transformation du polymère fonctionnalisé par hydroxyle (a3) avec l'isocyanatosilane (c3) est mise en œuvre en présence d'au moins un catalyseur (K) contenant du bismuth, et que le mélange réactionnel, au début de cette étape de procédé, contient 50 à 250 ppm d'eau.

10. Procédé selon la revendication 9, **caractérisé en ce que** les rapports de quantités des composants (a3) et (c3) sont choisis de telle manière que par mole de groupes hydroxyle du composant (a3), 0,5 à 2,0 moles de groupes isocyanate du composant (c3) sont utilisées.

11. Procédé selon la revendication 9 ou 10, **caractérisé en ce que** le polymère fonctionnalisé par hydroxyle (a3) est transformé avec un excès de silane fonctionnalisé par isocyanate (c3).
